# EUROPEAN PATENT APPLICATION

(11) **EP 2 977 929 A1**
(43) Date of publication of application: **27.01.2016**
(21) Application number: 14002598.2
(22) Date of filing: 25.07.2014
(51) Int. Cl.: G06F 21/62, G06F 17/30, H04L 9/08

(54) **Method and system to store data on a server**

(71) Applicant: Giesecke & Devrient GmbH, 81677 München (DE)
(72) Inventor: Tea, Vui Huang, 120 61 Stockholm (SE)

(57) **Abstract**

The invention relates to a method to store a data item in a memory (21) of a server (20) and a server (20) to store data items of a multiplicity of secure elements (10, 10a, 10b, 10c). A first compression key (25) is assigned to a first data item. According to the method, the server (20) receives (S3) a second data item to be stored on the server from a secure element (10, 10a, 10b, 10c) and stores (S5) the second data item in the memory (21) of the server (20). Further, the server (20) provides (S11) the second data item to the secure element (10, 10a, 10b, 10c). The server generates (S6.1) a second compression key (26) by the server (20) with respect to the second data item and sends in advance (S7.1) the second compression key (26) to the secure element (10).

## Description

The present invention relates to a method and a system to store data on a server.

The number of mobile devices rises. Mobile devices, e.g. mobile phones, smart phones, tablets or notebooks, can be applied universally. Thus, a range of applications running on a mobile device increases. An application can run on a mobile device or on a secure element insertable in mobile devices. Multiple use of different applications lead to an upcoming demand on data storage. There is a need in memory capacity to store all needed applications and its associated data like photos, contacts or music files. Some of this data are predestined to be stored on a secure element inserted in the mobile device, e.g. a SIM card, others can also be stored on the mobile device, e.g. an external memory device or secure element.

To reduce memory resources data usually stored on the secure element or on the portable device can be outsourced to an external memory, in particular a server. A user can access the memory of the server for example directly, e.g. via remote access. To work with the data user's device usually has to transfer the data from the server to the secure element. The data on the server cannot be edited directly.

If the secure element sends a request for data stored on the server data is transferred completely from the server to the secure element. This results in a high data transfer volume. To reduce data transfer volume data can be compressed. There are different methods to compress data using compression algorithm having a compression key. The data transfer volume can be reduced efficiently. The compressed data can be decompressed using the correct compression key.

Due to increasing data volume on a secure element there is continuous an increasing demand on outsourcing data. This results in a high data transfer volume and a high demand on memory resources.

The object of the present invention is to take account of the disadvantages of the prior art. In particular the object of the present invention is to provide a method to optimize and/ or to reduce the transfer volume of data to be transferred and its storage volume in a sufficient way.

This object is achieved by a method, a server and a system according to the independent claims. Advantageous embodiments and developments are stated in dependent claims.

With respect to a method according to the invention to store a data item on a server, wherein a first compression key is assigned to a first data item, the server receives a second data item to be stored in its memory from a secure element. Furthermore, the server generates a second compression key with respect to at least the second data item. The second compression key is sent to the secure element in advance. The server provides the second data item to the secure element to transfer the second data item from the memory of the server to the secure element.

Provision of the second data item could be that the server basically enables transmission of the second data item to the secure element preferably beside security conditions like authorization. Provision could be performed with enabling inspection an index of the memory of the server or the fact in data item transmission.

Sending the second compression key in advance means that the second compression key is sent before the server transfers the second data item to the secure element. Sending the second compression key and transmission of the second data item from the server to the secure element, in particular provision of the second data item to the secure element, are executed separately.

The server generates the second compression key after receiving the second data item. After the server sends the second compression key to the secure element the server provides the second data item to the secure element. Consequently, the server transmits the second compression key to the secure element before the secure element sends a request for the second data item to the server. After the server receives the request it transfers the second data item to the secure element, wherein the second data item is compressed using the second compression key.

The second compression key has been transferred to the secure element prior before server starts to transfer the second data item to the secure element. Thus the second compression key has not to be transferred in combination with the compressed second data item. The second compression key has to be transferred only one times, namely after its selection. Thus, only the second data item itself has to be transferred from the server to the secure element. The second compression key has not to be included in compressed second data item during transferring from server to secure element. If the second data item is requested twice or more the transfer volume caused by transferring the (compressed) second data item from the server to the secure element is significantly reduced. Furthermore, usually the assignment of second compression key to second data item is only known by restricted transfer partners, e.g. the server and/ or the secure element and/ or its user. Other secure elements and/or users do not know the correct compression key or the location of and/ or link to the second data item. Thus, the second data item transferred from the server to another secure element cannot be decompressed by the other secure element. The security of file storage and file transfer is increased.

The first data item can be stored in the memory of the server or in a memory of the secure element. The first data item is preloaded on the server. Alternatively, the first data item can exist only imaginary. With first sign-on to the server parameters for storage service of the at least imaginary first data item are defined. Based on these parameters, e.g. expected size or expected frequency of access, the server creates the first compression key.

Preferable, with first log-in or sign-on of the secure element or its user to a server storage, e.g. with first selection of the service of the server storage, the first compression key is sent from the server to the secure element, e.g. after generating the first compression key. This means, that the server sends the first compression key to the secure element in advance, in particular before the secure element sends the second data item to the server. In one embodiment the first compression key can be a universal compression key to send data items, especially the second data item, from the secure element to the server. In one embodiment, the first compression key is valid only for the first transfer of a data item, namely to transfer the second data item from the secure element to the server for the first time to compress the second data item to reduce transfer resources using the first compression key.

The secure element can be a portable data carrier, e.g. a chip card, a mass storage card or a USB-token. The secure element can be permanently installed in a module or a device, the secure element for example being a trusted platform module (TPM), a M2M-module, a user identification module like an embedded SIM-(Subscriber Identification Module-) Card or a decoder module. The secure element can be integrated in a notebook, mobile telephone, computer or keyboard. Preferably the secure element comprises a CPU (in particular processor) and a memory. The CPU can be adapted to run an operating system.

Basically a data item can be information or a compilation of information. The data item can be a file or a data packet. For example the data item may be a contact list, photo data, video data, music data and/or a configuration profile and/or a combination thereof. The data item is used to be stored in a memory, for example of the secure element, a portable device or a server. The secure element can be connected to the server via WLAN, mobile telephone network, Bluetooth or NFC. The connection can also be a combination thereof. The server is preferably a cloud server.

In one embodiment the memory of the server can be divided in different memory areas. At least one of the memory areas is adapted to store data items from the secure element. The server can assign the second data item to a specific memory area. An algorithm for assignment can depend on a data file format, data type of the second data item, an identification feature of the secure element and/ or its user, and / or properties of the second data item. Each memory area can comprise a specific compression key. To assign the second data item to a specific memory area the server can perform an analysis of the second data item. Furthermore the secure element can integrate information to enforce a special assignment of the second data item to a specific memory area when transferring to server.

To reduce memory resources on the server it can store the second data item in its memory in compressed state using the second compression key. The use of server's memory is more efficient. The second compression key is only known by the server and authorized partners, e.g. secure element or user. The second compression key has not to be included in the compressed second data item on the server. Thus, unauthorized access to the second data item is effectively prevented. In one embodiment the memory area having the second data item is compressed using the second compression key. The compressed second data item can comprise a link to the second compression key or the server can comprise an assignment table showing a link between compression key and second data item. The memory area can be packaged or each data item in the memory can be compressed separately. The resources for content administration and compression key management can be reduced.

There are different methods to generate the second compression key. In one embodiment the content of the memory and/ or memory area having the second data item is being compressed using the second compression key. Furthermore, the content of this memory and/ or memory area is temporary compressed using the first compression key. The server compares the compressed content using the second compression key with the compressed content using the first compression key. The server further checks the properties, e.g. compression rates or integrities, of the two compressed data items. Based on the check and the comparison of the two compressed data items the server determines the most efficient compression key. The server uses the most efficient compression key as a new compression key for the second data item. Preferably, the old, first compression key will be updated by the second compression key.

If a further data item should be stored in the memory of the server a new compression key could be generated in an analog method and the second compression key might be updated by the new compression key. To generate the new compression key preferably all the content of the relevant memory area with respect to the further data item should be considered.

To transfer the second data item from the server to the secure element the secure element sends a request to the server. The request can include the path of the second data item on the server. In advance the request, in combination with the request or after the request the secure element can send an authorization request to the server for requesting the second data item. Unauthorized transfer of the second data item from the server is prevented. In one embodiment the secure element sending the request for the second data item has to be identical to the secure element from which the second data item has been previously transferred to the server. Herewith the server can check the identification, e.g. the identification number, of the secure element.

In one preferred embodiment the secure element has to send a request for the second data item to the server before the server provides the second data item. This means, that the server does not provide or send a directory or index of its memory showing the second data item stored on the memory of the server. External devices cannot take a look to the memory of the server and they don't get knowledge of data items stored in the memory of the server. Hence, the presence and in particular path of the second data item has to be known by the secure element.

The server can provide the data items stored on the server in different ways. In one embodiment, the server can provide the second data item in such a manner, that the second data item has to be transferred to the secure element without converting. That means, that the second data item is prepared for transmission, e.g. like a compressed data file using the second compression key. Furthermore, the data item can include information with regard to the second compression key, e.g. key number or a key version.

Resources for management of the compression key with respect to the data items stored on the server can be reduced, in particular, if there is a unique compression key for the memory or the memory area.

First data item and second data item can be assigned to the same memory or memory area. Hence, updating the first compression key with the second compression key will result that the second compression key is assigned to the first data item. The first compression key can be updated by the second compression key.

The above mentioned object of the invention is further solved by a server to store data items of in particular a multiplicity of secure elements. The server comprises a memory, an interface and a management unit. The memory is arranged to store at least a first data item of a secure element. The Interface is arranged to receive a second data item from the secure element to be stored on the server. The interface is further arranged to send the first and/ or second data item, stored in the memory of the server to the secure element. The memory unit is arranged to store the received second data item in the memory of the server. Furthermore, the management unit is arranged to manage a first compression key wherein the first compression key is assigned to the memory of the server.

The management unit is further arranged to generate a second compression key with respect to the first and second data item of the memory of the server after the server receives the second data item from the secure element. The management unit is arranged to update the first compression key with the second compression key. The interface is arranged to send the second compression key to the secure element in advance, namely prior before the server provides the second data item.

Sending the second compression key from the server in advance can occur in a different session to sending the request for the second data item from the secure element. Sending the second compression key is time-independent in advance of sending the request for the second data item.

With the present invention a data element can be stored on the server and provided to a secure element with high performance and low resource requirements for memory and transmission.

Other features and advantages of the present invention will become apparent from the following detailed description of the invention made with reference to the accompanying drawings.
- Fig. 1a: shows a flow chart to store a data item in a memory of a server according to the invention.
- Fig. 1b: shows a flow chart to provide the data item stored on the server according to Fig.1a.
- Fig. 2: shows a system according to the invention.
- Fig. 3: shows an example of allocation of data items, compression keys and memory area according to the invention.

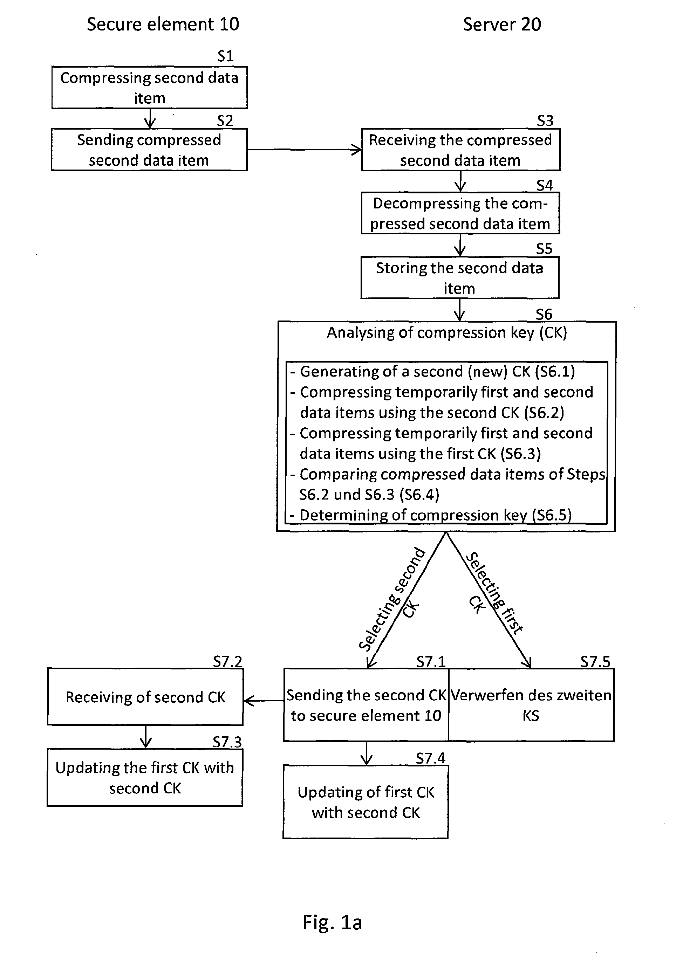

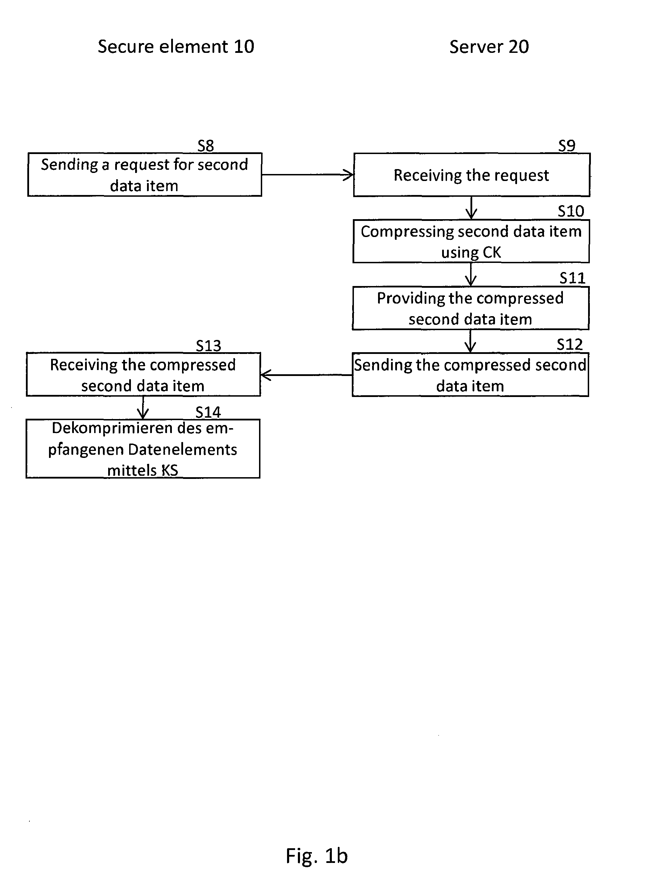

Fig. 1 shows an example of a flow chart to store data items of a secure element 10 on a server 20. Server 20 is designed to store data items. In this example a first data item is previously stored on the server 20. Based on the first data item there is a first compression key. First compression key is known by the secure element 10 and the server 20.

In step S1 the secure element 10 compresses a second data item stored on the secure element 10 being compressed using the first compression key. Subsequently, in step S2 the secure element 10 sends the second data item to the server 20 in compressed state. The server 20 and the secure element 10 know the first compression key. The first compression key is not included in the compressed second data item. The transfer resources, e.g. transfer volume and transfer time, to transfer the second data item are reduced.

In step S3 the server 20 receives the compressed second data item. In step S4 the server 20 decompresses the compressed second data item. When the second data item is decompressed, in step S5 the server 20 selects a memory area of the server 20 to store the second data item. To select a memory area and store the second data item the server 20 analyses the second data item, e.g. its origin, user, type and/or size.

The memory of the server 20 could have different memory areas. For example, a specific memory area is determined for data items of specific data type or user. In Fig. 1a the first and second data item are assigned to the same memory area. A first compression key is linked to the memory area, the first and second data item are assigned to. To reduce memory resources of the memory area its content, i.e. the first and second data item, is compressed using the first compression key.

With storing the second data item the properties of the memory and/ or memory area have changed. Therefore, in step S6 the server 20 analyses the compression performance of the memory area with respect to its compression key. In step S6.1 the server 20 generates a new, second compression key based on the content of the memory area, in particular based on the first and second data item. In step S6.2 the server 20 compresses temporarily the first and second data item using the second compression key. If the first and second data items are not already compressed in the memory using the first compression key in step S6.3 server 20 compresses temporarily the first and second data items using the first compression key. In step S6.4 the server 20 compares the compressed first and second data items using the first compression key with the compressed first and second data item using the second compression key to determine the most efficient compression key. The result of comparison step includes other parameters like frequency of transmission, compression rate, length of compression key and/or safety rules.

After comparison step S6.4 in step S6.5 the server selects the most efficient compression key of the first and second compression key. In the present embodiment the second compression key is more efficient than first compression key. Therefore, in step S7.1 the second compression key is sent to the secure element 10. The at least temporary compressed first and second data items using first compression key is deleted from server 20. Temporary compressed first and second data items using the second compression key are saved in its assigned memory area of the server 20. First and second data items are compressed using the second compression key in the memory area of the server 20. In step S7.4 the server 20 updates the first compression key of the memory area in which first and second data items are stored.

After step S7.1, sending the second compression key from the server 20 to the secure element 10, in step S7.2 the secure element 10 receives the second compression key. In step S7.3 the secure element 10 updates the existing, first compression key with the second compression key.

For storing further data items from the secure element 10 at the server 20 the secure element 10 compresses the further data item using the second compression key and transfers the compressed further data item to the server 20. Steps S2 to S7.5 will be repeated as necessary. Hence, second compression key on the server 20 as well as on the secure element 10 will probably be updated with another compression key after further analysis with regard to first, second and further data item.

If in step S6.5 the server determines the first compression key more efficient than second compression key second compression key as well as temporary stored compressed first and second data items will be deleted. The first compression key could be sent from server 20 to secure element 10. In the memory area of the server 20 the first and second data items are stored preferably in compressed state using the first compression key.

To store a further data item stored on the secure element 10 to the server 20 the secure element 20 uses the first compression key to compress the further data item. The above mentioned steps S2 to S7.5 are executed again.

Fig.1b shows a method to provide the second data items stored in the memory area of the server 20. It is assumed the server 20 had selected the second compression key as most efficient compression key and uses it for further processing. The second data item has been stored on the server according to the method shown in Fig.1a.

In step S8 the secure element 10 sends to server 20 a request to transfer the second data item to secure element 10. In step S9 the server 20 receives the request and identifies the memory or memory area in which the second data item is stored. If the second data item is not compressed in the memory or memory area, in step S10 the server 20 compresses the second data item using a compression key assigned to the memory or memory area. In the present example the second data item is compressed by the server 20 using the second compression key. In step S11 the compressed second data item is provided to the secure element 10. In step S12 the server 20 sends the compressed second data item to the secure element 10.

In step S13 the secure element 10 receives the compressed second data item. The secure element 10 decompresses the received compressed second data item using the compression key stored in the secure element 10 (step S14). The stored compression key is identical to the second compression key of the server 20, which previously is transmitted from the server 20 to the secure element 10 (S7.1 and S7.2).

The transfer volume is reduced with transmitting the compressed data items using the above method. The compression key used to compress the first and second data items is already stored on the secure element 10 in advance as well as on the server 20. Thus, the compression key of the compressed first and second data items had not been integrated in the compressed first and second data item. The transfer time of the data items takes less time compared to the prior art. The compression properties of the memory and/or memory area of the server, in which the first and second data item are stored, are optimized.

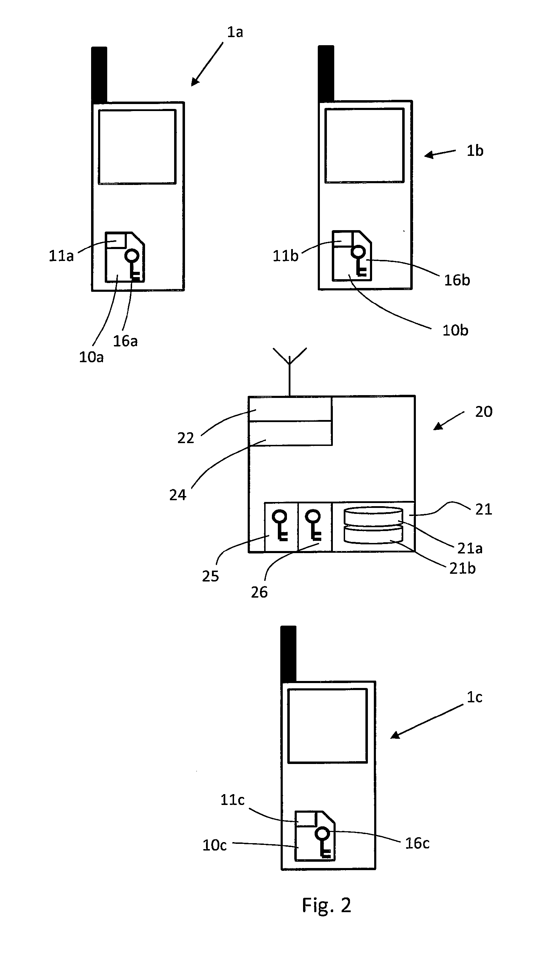

Fig. 2 shows schematically a system to store data items of a multiplicity of secure elements.

The system comprises three portable devices, namely a first, a second and a third mobile telephone 1a, 1b, 1c. Each of the first, second or third mobile telephone 1a, 1b, 1c comprises a first, second or third secure element 10a, 10b, 10c, respectively. Each of the secure elements 10a, 10b, 10c is a SIM card. Each of the first, second and third secure elements 10a, 10b, 10c comprises a memory. A first, second, third data item is stored in a memory of the first, second, third secure element 10a, 10b, 10c, respectively.

A server 20 comprises an interface 22 to communicate with the first, second and third mobile telephone 1a, 1b, 1c. The server 20 comprises a memory 21 and a management unit 24. The management unit 24 administrates data items stored in the memory 21 as well as data to be stored in memory 21. The memory 21 comprises first and second memory areas 21a, 21b. A first compression key 25 is assigned to the first memory area 21a and to the second memory area 21b.

To use the server 20 for data storage the first secure element 10a is signed on the server 20. With signing on the server 20 it assigns the first memory area 21a to the first secure element 10a. The server 20 sends the first compression key 25 to the first secure element 10a.

For storing the first data item 11a on the server 20 the first secure element 10a compresses the first data item 11a using the first compression key 25. The secure element 10a sends the compressed first data item 11a to the server 20. The management unit 24 of the server 20 assigns the received compressed first data item 11a to the first memory area 21a. Then the memory unit 24 of the server 20 analyses the efficiency of the first compression key 25 in comparison with a new generated second compression key. Up to now the first data item 11a is the only data item assigned to the first memory area 21a. The management unit 24 determines after analyzing compression properties of the first data item 11a using the first and the second compression key 25, 26, that the first compression key 25 is more efficient than the second compression key 26. The server 20 drops the second compression key 26. The first data item 11a is stored compressed on the server 20.

The second secure element 10b is signed on the server 20 to store data items on the server 20, too. The management unit 24 of the server 20 has assigned the second secure element 10b to the first memory area 21a. So, the server 20 had transferred the first compression key 25 to the second secure element 10b.

To transfer the second data item 11b of the second secure element 10b to the server 20 and store the second data item 11b on the server 20 the second secure element 10b compresses the second data item 11b using the first compression key 25. Afterwards, the second secure element 10b transfers the compressed second data item 11b to the server 20. The management unit 24 analyses the compression properties of the at least virtual compressed first memory area 21a, i.e. the compression of the first and second data items 11a, 11b using the first compression key 25 and a new second compression key 26. The management unit 24 generates the new second compression key 26. With analyzing the compression properties of the first memory area 21a with respect to the first and second compression keys 25, 26 the management unit 24 determines that the new second compression key 26 is more efficient than the first compression key 25 to be used with the first memory area 21a. Hence the second compression key 26 is assigned to the first memory area 21a and updates the first compression key 25. Furthermore, the server 20 sends the second compression key 26 to the first and second secure elements 10a, 10b. The first and second secure elements 10a, 10b update their compression key 16a, 16b with the second compression key 26. To send another data item from the first or second secure elements 10a, 10b to the server 20 the other data item will be compressed using the second compression key 26 and updated compression key 16a, 16b, respectively. After receiving the other data item the server 20 generates a new and at least temporary compression key and analyses the new second compression key again. If needed an update of the existing (formerly) second compression key on the server 20 as well as the compression keys 16a, 16b on the first and second secure element 10a, 10b will be performed.

The third mobile device 10c having the third secure element 10c has signed on the server 20 to store data thereon. The management unit 24 of the server 20 assigns the third secure element 10c to the second memory area 21b. Basically, the first compression key 25 is assigned to the second memory area 21b. The server 20 transfers the first compression key 20 to the third secure element 10c. The third secure element 10c stores the first compression key 25 as its relevant compression key 16c.

The third data item 11c is stored on the third secure element 10c. To swap out the third data item 11c onto the server 20 the third secure element 10c compresses the third data item 11c using its compression key 11c, namely the first compression key 25, and transfers the compressed third data item 11c to the server 20. The server 20 assigns the compressed third data item 11c to the second memory area 21b. The management unit 24 generates a new third compression key (not shown) and analyses the third compression key with respect the first compression key 25 to determine the most efficient compression key for the second memory area 21b. As a result the management unit 24 determines the first compression key 25 as enough efficient. An update of the first compression key 25 assigned to the second memory area 21b is not needed. Hence, an update of the compression key 16c on the third secure element 10c is not needed.

To retrieve the first data item 11a from the server 20 the server 20 sends the first data item 11a from the first memory area 21 to the first secure element 10a. Before transferring the server 20 compresses the first data item 11a using the second compression key 26. The first secure element 10a decompresses the first data item 11a using its compression key 16a. The compression key 16a of the first secure element 10a is identical with the second compression key 26 of the server 20.

To retrieve the third data item 11c from the sever 20 it sends the third data item 11c from the second memory area 21b to the third secure element 10c in compressed state using the first compression key 25. The third secure element 10c decompresses the received compressed third data item 11c using its compression key 16c. The compression key 16c of the third secure element 10c is identical to the first compression key 25 of the server 20.

The generation and management of different compression keys is an iterative process. In particular, with a raising number of data items in a memory and/ or memory area the number of compression key updates is reduced, in particular if the analysis of compression efficiency considers also the compression key length and/ or potential savings of resources using a new compression key. That means, at first sight a new compression key could be more efficient but in the whole the transmission and updating process of the new compression key could effect a non-efficient processing.

After server 20 assigns a new compression key, i.e. second compression key 26 for the memory area 21b, the server 20 sends the new compression key to all respective secure elements, i.e. the first and second secure elements 10a, 10b, before the server 20 provides the respective data items to transfer to the secure elements. The respective secure elements update its compression key (s) to decompress the respective data items. Normally there is a time-gap between transfer of new compression key and providing the respective data item.

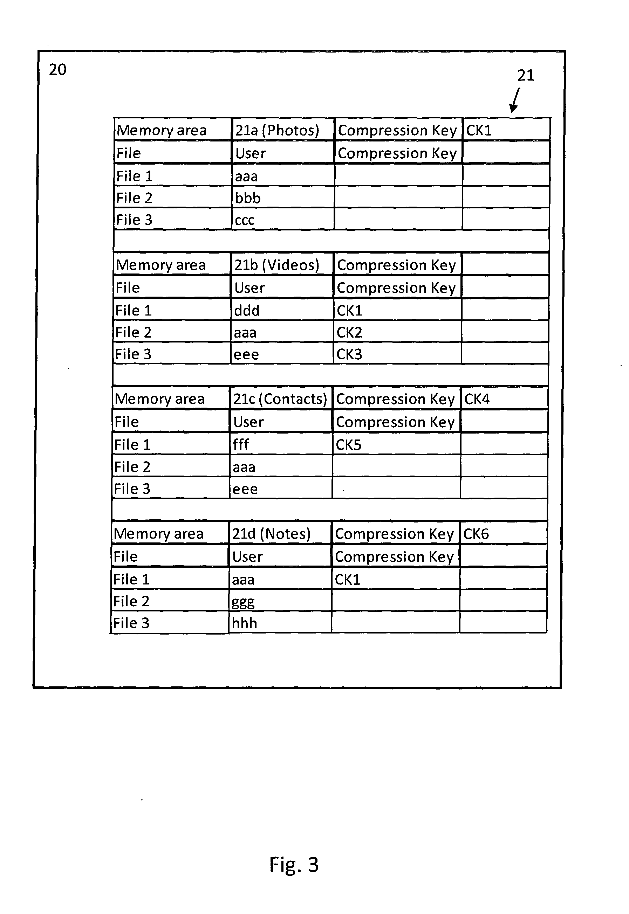

Fig. 3 shows a system for assigning data items to a memory of a server according to the invention. In contrast Figs.1a, 1b and 2 disclose memory areas of a server having data items of different secure elements. These data items are assigned according to its origin and/ or user. Against Fig. 3 shows another assignment of data items independent of its users and/ or origin.

A memory 21 of a server 20 is divided in different memory areas based on different categories. In this example the memory 21 comprises four memory areas 21a, 21b, 21c, 21d, namely one memory area for photos, one for videos, one for contacts and one for notes.

The memory area 21a is dedicated for photos. A universal compression key CK1 is assigned to the memory area 21a. As long as a data item in the memory area 21a doesn't include any information to use a special compression key compression key CK1 will be used to compress the data item in memory area 21a, at least to transfer one data item to a secure element. As can be seen in memory area 21a there are three data items (files 1 to 3) with its origin of different users (aaa, bbb, ccc).

The memory area 21b is reserved to store videos. There is no universal compression key assigned to memory area 21b. That means that each data item in the memory area 21b is assigned to a compression key on its own. For example a file 1 of memory area 21b is originated to a user ddd. Furthermore the file 1 of the memory area 21b is assigned to the compression key CK1. A file 2 of the memory area B is originated to the user aaa, wherein the file 2 is assigned to the compression key CK2. A file 3 of a user eee is assigned to a compression key CK3. Although the file 1 of memory area A (photos) and the file 2 of memory area 21b (videos) are originated from the user aaa these files are assigned to different compression keys.

The third memory area 21c is dedicated to store contact data items. A data file 1 of the memory area 21c is originated by a user fff and compressed using a compression key CK5. Furthermore, a file 2 is originated by the user aaa and a file 3 is originated by a user eee. File 2 and file 3 do not have any information to use a special compression key. To compress the files 2 and 3 the server 20 uses a universal compression key CK4 assigned to the memory area 21c.

The fourth memory area 21d is dedicated to store notes. A compression key CK6 is assigned to the memory area 21d as a universal compression key. A file 1 located in memory area 21d is originated from the user aaa. Despite assignation of the universal compression key CK6 the compression key CK1 is assigned to file 1. Furthermore in the memory area 21d there are files 2 and 3 using the universal compression key CK6.

As can be seen the memory 21 of the server 20 can be divided and/ or subdivided in different categories. A management unit of the server 20 can control access from any secure element to data items stored in the memory 21. Each of the compression keys CK1 to CK6 can be the first or second compression key of figures 1a, 1b and/ or 2.

Basically, a universal compression key could be assigned to all data items located in the memory or memory area, respectively, of the server. In particular, if data items located in a memory area differs significant in size and/ or frequency of access using special compression keys can be advantageous. Transfer resources can be reduced efficiently. Furthermore, to assign different compression keys the origin of the data file as well as the frequency requests for the data file can be considered by the management unit.

## Claims

1. Method to store a data item in a memory (21) of a server (20), wherein a first compression key (25) is assigned to a first data item, the server (20) performing the steps of:
- receiving (S3) a second data item to be stored on the server from a secure element (10, 10a, 10b, 10c);
- storing (S5) the second data item in the memory (21) of the server (20); and
- providing (S11) the second data item to the secure element (10, 10a, 10b, 10c);
**characterized by**:
- generating (S6.1) a second compression key (26) by the server (20) with respect to the second data item; and
- sending in advance (S7.1) the second compression key (26) to the secure element (10).

2. Method according to claim 1, wherein the server (20) selects a memory area (21a, 21b) in the memory (21) of the server (20) for storing (S5) the second data item.

3. Method according to one of the preceding claims, wherein the server (20) compresses the second data item and stores (S5) the compressed second data item in the memory (21) of the server (20).

4. Method according to one of the preceding claims, wherein the second compression key (26) is assigned to the memory (21), preferably to the memory area (21a, 21b), including the second data item.

5. Method according to one of the preceding claims, wherein with generating (S6.1) the second compression key (26) the server performs the following steps:
- compressing (S6.2) the content of the memory (21) using the second compression key (26);
- compressing (S6.3) the content of the memory (21) using the first compression key (25); and
- comparing (S6.4) the compressed content of the memory (21) using the second compression key (26) with the compressed content of the memory (21) using the first compression key (25).

6. Method according to one of the preceding claims, wherein the secure element (10) requests (S8) the second data item stored on the server (20).

7. Method according to claim 6, wherein the request (S8) for the second data item from the secure element (10) takes place before the server (20) provides (S11) the second data item.

8. Method according to one of the preceding claims, wherein the server (20) sends (S12) the provided (S11) second data item to the secure element (10).

9. Method according to claim 8, wherein the server (20) compresses the second data item to send (S12) the second data item to the secure element (10) using the second compression key (26).

10. Method according to one of the claims 8 or 9, wherein the secure element (10) receives the second data item (S13) and decompresses (S14) the second data item using the second compression key (26).

11. Method according to one of the preceding claims, wherein with providing (S11) the second data item the server (20) inserts an information of the second compression key (26), in particular a version ID or an identifier, to the second data item.

12. Method according to one of the preceding claims, wherein the second compression key is sent to a multiplicity of secure elements (10,10a, 10b, 10c).

13. Method according to one of the preceding claims, wherein the second data item is assigned to the same memory (21) as the first data item and a second compression key (26) is assigned to the second and first data item.

14. Server (20) to store data items of a multiplicity of secure elements (10, 10a, 10b, 10c), wherein the server (20) comprises a memory (21), an interface (22) and a management unit (24), wherein
- the memory (21) is arranged to store at least a first data item of at least a secure element (10, 10a, 10b, 10c);
- the interface (22) is arranged to receive a second data item from the secure element (10, 10a, 10b, 10c) and to send the first and/or second data item, stored in the memory (21) of the server (20); and
- the management unit (24) is arranged to store the received second data items in the memory (21) of the server (20), to manage a first compression key (25), wherein the first compression key (25) is assigned to memory (21) of the server, and to provide second data item
**characterized by**
- the management unit (24), arranged to generate a second compression key (26) with respect to the first and/or second data item of the memory (21) of the server (20), after the server (20) receives the second data item from the secure element (10), and to update the first compression key (25) with the second compression key (26); and
- the interface (22) is arranged to send the second compression key (26) to the secure element (10, 10a, 10b, 10c) in advance.

15. System to store a second data item on a server, wherein the server is arranged according claim 14 and/ or the system is arranged to perform a method according to any of claims 1 to 13.
